# EUROPÄISCHE PATENTANMELDUNG

(11) **EP 3 738 803 A1**
(43) Veröffentlichungstag der Anmeldung: **18.11.2020**
(21) Anmeldenummer: 19175117.1
(22) Anmeldetag: 17.05.2019
(51) Int. Cl.: B60H 1/00, B60H 1/26, B60P 3/20, F25D 19/00

(54) **NUTZFAHRZEUG MIT EINEM AUFBAU**

(71) Anmelder: Schmitz Cargobull AG, 48341 Altenberge (DE)
(72) Erfinder: Beelmann, Reinhard, 45721 Haltern am See (DE)
(74) Vertreter: Cohausz & Florack

(57) **Zusammenfassung**

Die Erfindung betrifft ein Nutzfahrzeug mit einem Aufbau (4), der einen Laderaum (R) zur Aufnahme von Transportgut umgrenzt und eine Wand (6) aufweist, wobei das Nutzfahrzeug (1) eine Steuereinrichtung umfasst, die zum Steuern einer Systemkomponente des Nutzfahrzeugs (1) vorgesehen ist, und wobei an der Wand (6) des Aufbaus (4) mindestens eine Belüftungsöffnung (15,16) zum Einleiten von Luft aus der Umgebung des Aufbaus (4) in den Laderaum (R) vorgesehen ist. Um bei einem solchen Aufbau die Bedienung der zum Öffnen und Schließen der Belüftungsklappe vorgesehenen Schließeinrichtung mit einfachen Mitteln zu vereinfachen, ordnet die Erfindung der Belüftungsöffnung (15,16) eine Schließeinrichtung (18,19) zu, die eine weitere Systemkomponente des Nutzfahrzeugs (1) bildet und die bedarfsweise Stellsignale zum Öffnen und Verschließen der Belüftungsöffnung (15,16) an die Schließeinrichtung (18,19) abgibt.

## Beschreibung

Die Erfindung betrifft ein Nutzfahrzeug mit einem Aufbau, der einen Laderaum zur Aufnahme von Transportgut umgrenzt und eine Wand aufweist. Dabei umfasst das Nutzfahrzeug eine Steuereinrichtung, die zum Steuern einer Systemkomponente des Nutzfahrzeugs vorgesehen ist. An der Wand des Aufbaus ist mindestens eine Belüftungsöffnung zum Einleiten von Luft aus der Umgebung des Aufbaus in den Laderaum vorgesehen.

Bei Nutzfahrzeugen der hier in Rede stehenden Art handelt es sich um Lastkraftwagen, Anhänger oder Sattelauflieger und desgleichen, die unabhängig von ihrer Ausgestaltung für den Transport von Gütern im Straßenverkehr bestimmt sind.

Die Aufbauten solcher Nutzfahrzeuge sind typischerweise als so genannte "Kofferaufbauten" ausgestaltet, die eine quaderförmig langgestreckte Form aufweisen und aus stabilen Wänden zusammengesetzt sind, die das Dach, die Seitenwände, die Stirn und die Rückwand des jeweiligen Aufbaus bilden. Der so gebildete Aufbau schirmt das in dem von ihm umgebenen Laderaum verstaute Transportgut gegen Temperaturschwankungen, Feuchtigkeit oder sonstige äußere Gegebenheiten ab, durch die das Transportgut beschädigt oder in seiner Qualität beeinflusst werden könnte.

Von besonderer Bedeutung sind dabei solche Kofferaufbauten, die mit einer Transportkältemaschine ausgestattet sind, um die im vom Kofferaufbau umgrenzten Laderaum vorhandene Atmosphäre auf einem bestimmten Temperaturniveau zu halten. So werden Kofferaufbauten, an denen eine Transportkältemaschine vorgesehen ist, beispielsweise zum Transport von Tiefkühlkost oder von Frischwaren eingesetzt, die während des Transports zwingend auf einem bestimmten niedrigen Temperaturniveau gehalten werden müssen. Genauso werden Kofferaufbauten mit einer Transportkältemaschine aber auch zum Transport von Waren verwendet, die zwar nicht speziell gekühlt, jedoch bei einer gleichmäßigen Temperatur gehalten werden müssen. In diesem Fall ist die Transportkältemaschine so eingerichtet, dass sie bedarfsweise nicht nur gekühlte, sondern auch erwärmte Luft in den Laderaum bläst.

Um neben dem durch die Transportkältemaschine in den Laderaum geblasenen temperierten Luftstrom auch bedarfsweise eine Belüftung des Laderaums zu ermöglichen, bei der Luft direkt, d.h. ohne den Weg über die Transportkältemaschine, aus der Umgebung in den Laderaum geleitet wird, kann in der Stirnwand des Aufbaus eine Belüftungsöffnung vorgesehen sein. Die durch die Belüftungsöffnung in den Laderaum geleitete Luft kann beispielsweise während einer Leerfahrt genutzt werden, um den Laderaum zu trocknen oder die im Laderaum enthaltene Luft gezielt auszutauschen. Ebenso kann beispielsweise in der Rückwand oder jeder anderen Wand des Aufbaus eine solche Belüftungsöffnung vorgesehen sein, um auch dort ein gezieltes Ein- oder Ausströmen eines Luftstroms in oder aus dem Laderaum des jeweiligen Fahrzeugs zu ermöglichen.

Um die Belüftungsöffnung beispielsweise bei aktiver Transportkältemaschine oder nach dem Verstauen des Transportguts verschließen zu können, ist üblicherweise eine als Schließeinrichtung dienende Verschlussklappe vorgesehen, die verschwenkbar an der jeweiligen Wand gelagert ist und zwischen einer Öffnungsstellung, in der Luft aus der Umgebung in den Laderaum einströmt, und einer Schließstellung verschwenkt werden kann, in der die Belüftungsöffnung dicht verschlossen ist. Die Verstellung erfolgt dabei heute in der Regel manuell durch den Fahrzeugführer.

Um eine optimale Durchströmung des Laderaums mit der Frischluft zu ermöglichen, ist die Belüftungsöffnung üblicherweise im oberen Bereich der Stirnwand des Aufbaus oberhalb der Transportkältemaschine angeordnet, da sie dort in der Fahrtwindströmung steht und nicht durch die Zugmaschine verdeckt wird. Diese Positionierung weit oberhalb der Reichweite eines normal großen Menschen erschwert die Bedienung der Verschlussklappe. Deshalb wird in der Regel die Verschlussklappe mit Hilfe einer Stange bedient oder der Fahrzeugführer muss an dem Fahrzeug zu der als Schließeinrichtung dienenden Klappe hinaufsteigen, um sie zu öffnen oder zu schließen.

Darüber hinaus steht bei einer Anordnung der Belüftungsöffnung im oberen dachnahen Teil der Stirnwand des Aufbaus dem Vorteil der ungehinderten Luftzufuhr der Nachteil entgegen, dass bei Regen oder Schnee Niederschlag durch die offenen Belüftungsöffnungen in den Laderaum gelangen kann, so dass der eigentliche Zweck der Belüftungsöffnung konterkariert wird.

Ausgehend von dem voranstehend erläuterten Stand der Technik hat sich die Aufgabe gestellt, einen Aufbau der voranstehend erläuterten Art zu schaffen, bei dem die Bedienung der zum Öffnen und Schließen der Belüftungsklappe vorgesehene Schließeinrichtung mit einfachen Mitteln vereinfacht ist.

Die Erfindung hat diese Aufgabe durch ein Nutzfahrzeug gelöst, das mindestens die in Anspruch 1 angegebenen Merkmale aufweist.

Vorteilhafte Ausgestaltungen der Erfindung sind in den abhängigen Ansprüchen angegeben und werden wie der allgemeine Erfindungsgedanke nachfolgend im Einzelnen erläutert.

In Übereinstimmung mit dem eingangs erläuterten Stand der Technik hat ein erfindungsgemäßes Nutzfahrzeug somit einen Aufbau, der einen Laderaum zur Aufnahme von Transportgut umgrenzt und eine Wand aufweist, wobei das Nutzfahrzeug eine Steuereinrichtung umfasst, die zum Steuern einer Systemkomponente des Nutzfahrzeugs vorgesehen ist, und wobei an der Wand des Aufbaus mindestens eine Belüftungsöffnung zum Einleiten von Luft aus der Umgebung des Aufbaus in den Laderaum vorgesehen ist.

Erfindungsgemäß ist nun bei einem solchen Nutzfahrzeug der Belüftungsöffnung eine Schließeinrichtung zugeordnet, die eine weitere Systemkomponente des Nutzfahrzeugs darstellt, wobei die Steuereinrichtung bedarfsweise Stellsignale zum Öffnen und Verschließen der Belüftungsöffnungen an die Schließeinrichtung abgibt.

Bei einem erfindungsgemäßen Nutzfahrzeug erfolgt somit die Verstellung der zum Öffnen und Schließen der Belüftungsöffnung vorgesehenen Schließeinrichtung nicht mehr durch direkte manuelle Betätigung durch eine Bedienperson. Vielmehr wird bei einem erfindungsgemäßen Nutzfahrzeug die Schließeinrichtung durch ein von einer Steuereinrichtung abgegebenes Steuersignal ausgelöst. Dies erlaubt es, die Steuereinrichtung an einer Stelle des Nutzfahrzeugs anzuordnen, die für die Bedienperson leicht zugänglich und gleichzeitig ausreichend beispielsweise gegen Umwelteinflüsse und Vandalismus geschützt ist.

Das jeweilige Steuersignal wird erfindungsgemäß abgegeben, wenn der Bedarf besteht, die Schließeinrichtung vom geöffneten in den geschlossenen Zustand zu bewegen oder umgekehrt. Ein solcher Bedarf kann beispielsweise durch eine automatische Überwachungseinrichtung festgestellt oder durch manuelle Betätigung beispielsweise eines elektrischen oder mechanischen Schalters durch eine Bedienperson der Steuereinrichtung angezeigt werden. So kann beispielsweise die Steuereinrichtung ein manuell durch eine Bedienperson betätigbares Bedienelement umfassen, welches bei Betätigung das an die Schließeinrichtung abgegebene Stellsignal zum Öffnen und Verschließen der Belüftungsöffnungen auslöst.

Die Übertragung des jeweiligen Stellsignals zur Steuereinrichtung kann dabei in jeder geeigneten Form erfolgen. So ist beispielsweise auch eine mechanische Signalübertragung mittels eines mechanischen Stellgetriebes oder eine Übertragung mit Hilfe von hydraulischen oder pneumatischen Stellmitteln möglich. Besonders geeignet ist eine elektrische oder drahtlose Übermittlung des Stellsignals an die Schließeinrichtung, da in diesem Fall nur geringer Aufwand für die Ausrüstung des Nutzfahrzeugs erforderlich ist. Wird ein Stellsignal ausreichender Stärke versendet, kann die durch das Stellsignal übertragene Energie auch zum Antrieb der Stelleinrichtung genutzt werden.

Besonders vorteilhaft lässt sich die Signalübertragung und das durch die übertragenen Stellsignale erfindungsgemäß aus der Ferne erfolgende Steuern der der Belüftungsöffnung zugeordneten Schließeinrichtung dadurch verwirklichen, dass die Schließeinrichtung einen motorisch angetriebenen Stellantrieb verkoppelt, der dazu eingerichtet ist, die Schließeinrichtung zwischen einer Schließstellung und einer Öffnungsstellung zu verstellen. Moderne für derartige Zwecke im Markt zur Verfügung stehende Stellantriebe erlauben es auf kleinstem Raum, ausreichende Stellkräfte für die Verstellung der Schließeinrichtung zu erzeugen, und lassen sich darüber hinaus problemlos durch Stellsignale steuern, die von einer entfernt von ihnen angeordneten, entweder per Kabel oder kabellos mit ihnen signaltechnisch verbundene Steuereinrichtung steuern.

Eine besonders wirtschaftliche und hinsichtlich der an einem Nutzfahrzeug der hier in Rede stehenden Art zur Verfügung stehenden Energie besonders effektive Ausgestaltung der Erfindung zeichnet sich dabei dadurch aus, dass der Stellantrieb die für seinen Betrieb erforderliche Energie von einer an dem Nutzfahrzeug vorgesehenen Energieversorgung bezieht. Bei der Energieversorgung kann es sich um eine Batterie, eine Solarzelle, einen motorischen Antrieb, eine Einrichtung zur Rückgewinnung von kinetischer Energie des Fahrzeugs, einen separat motorisch oder durch die Fahrbewegungen des Fahrzeugs angetriebenen Generator oder desgleichen handeln.

Auch bei einem erfindungsgemäßen Aufbau sitzt die jeweilige Belüftungsöffnung vorteilhafterweise in der Stirnwand des Aufbaus, so dass sie dem Fahrtwind ausgesetzt ist. Jedoch kann es ebenso zweckmäßig sein, eine Belüftungsöffnung, der eine in der erfindungsgemäßen Weise betätigbare Schließeinrichtung zugeordnet ist, in der Rückwand, beispielsweise in einer dort vorgesehenen Tür, vorzusehen. Dies erweist sich insbesondere dann als vorteilhaft, wenn sowohl an der Stirnwand, als auch an der Rückwand eine solche Öffnung angeordnet ist, weil auf diese Weise eine gezielte Durchströmung des Laderaums mit Frischluft mit einfachen Mitteln erzielt werden kann. Gleichfalls können eine, zwei oder mehr Belüftungsöffnungen, die in erfindungsgemäßer Weise öffen- und schließbar sind, auch in einer oder beiden Seitenwänden des Aufbaus angeordnet sein, wenn beispielweise eine abschnittsweise Belüftung des Laderaums mit Frischluft ermöglicht werden soll. Genauso kann auch mindestens eine Belüftungsöffnung, der eine erfindungsgemäß betreibbare Schließeinrichtung zugeordnet ist, im Dach des Aufbaus vorgesehen sein.

Im Fall, dass an der zur Umgebung des Aufbaus gewandten Außenseite der mit der Lüftungsöffnung versehenen Wand eine Transportkältemaschine befestigt ist, die eine der Systemkomponenten des Nutzfahrzeugs darstellt und ein Gehäuse sowie eine Energieversorgung umfasst, die die zum Betrieb der Transportkältemaschine benötigte Energie liefert, kann gemäß einer besonders praxisgerechten Ausgestaltung erfindungsgemäß die an der Transportkältemaschine des Aufbaus notwendig vorhandene Energiequelle zum Antrieb für die motorische Betätigung der Schließeinrichtung genutzt werden. Auf diese Weise ist ein minimaler Aufwand für die Energieversorgung und damit einhergehend für die Ansteuerung des motorischen Stellantriebs der Schließeinrichtung erforderlich. Typischerweise ist die Transportkältemaschine dabei an der Stirnwand des Aufbaus angeordnet, so dass in diesem Fall typischerweise auch dort die in erfindungsgemäßer Weise mit einer Schließeinrichtung versehene Belüftungsöffnung vorgesehen ist.

Grundsätzlich ist eine solche Anbindung des Stellantriebs der Schließeinrichtung auch dann möglich, wenn die Transportkältemaschine rein mechanisch angetrieben wird. In diesem Fall kann beispielsweise über eine geeignete Kupplung der Stellantrieb bedarfsweise für die Betätigung der Schließeinrichtung an den Antrieb der Transportkältemaschine angekoppelt werden. Besonders einfach ist die Ankopplung des Stellantriebs an die Transportkältemaschine dann möglich, wenn die Transportkältemaschine zumindest teilweise elektrisch betrieben wird und auch der Stellantrieb der Schließeinrichtung elektrisch angetrieben ist.

Als besonders vorteilhaft erweist es sich, dass der erfindungsgemäß vorgesehene Stellantrieb der Schließeinrichtung sich problemlos in das Gehäuse der Transportkältemaschine integrieren lässt. Durch eine Integration in das Transportkältemaschinengehäuse ist nicht nur die Anbindung an die Energieversorgung der Transportkältemaschine besonders einfach, sondern der Stellantrieb ist auch gegenüber der Umgebung der Transportkältemaschine abgeschirmt. Auf diese Weise ist der Stellantrieb nicht nur gegen Wettereinflüsse, sondern auch gegen Manipulationsversuche oder mutwillige Beschädigung geschützt.

Dabei muss der Stellantrieb nicht notwendig in ein bestehendes Gehäuse der Transportkältemaschine integriert sein. Vielmehr kann der Stellantrieb auch in einen gesonderten Gehäuseteil angeordnet werden, der an dem Gehäuse der Transportkältemaschine angebaut ist, beispielsweise auf das bestehende Gehäuse der Transportkältemaschine aufgesetzt und damit ein Teil des Transportkältemaschinen-Gehäuses wird. Die Anordnung des Stellantriebs in einem nachträglich an das Gehäuse der Transportkältemaschine befestigten Gehäuseteil eignet sich dabei insbesondere zum Nachrüsten bestehender Aufbauten.

Als besonders praxisgerecht hinsichtlich des Schutzes der bewegten Teile des erfindungsgemäß mit der Schließeinrichtung des Aufbaus verkoppelten Stellantriebs hat es sich herausgestellt, wenn die Belüftungsöffnung in dem von der Transportkältemaschine abgedeckten Bereich der Wand, insbesondere Stirnwand, des Aufbaus angeordnet ist und in oder an dem Gehäuse der Transportkältemaschine ein Luftkanal vorgesehen ist, der von der freien Umgebung der Transportkältemaschine zu der Belüftungsöffnung führt. Auf diese Weise ist auch die Belüftungsöffnung nicht mehr unmittelbar der Umgebung ausgesetzt, sondern die Luft gelangt über einen Kanal zu der Belüftungsöffnung, so dass bei der Fahrt beispielsweise Regentropfen und desgleichen zumindest abgebremst werden können, bevor sie zu der Schließeinrichtung gelangen und der zu der Belüftungsöffnung strömende Luftvolumenstrom gezielt durch die Schließeinrichtung gesteuert werden kann.

Eine maximale Integration kann bei dieser Ausgestaltung dadurch erreicht werden, dass der Luftkanal im Gehäuse der Transportkältemaschine und die Eintrittsöffnung in eine Gehäusewand des Gehäuses der Transportkältemaschine eingeformt ist.

Insbesondere dann, wenn ein Aufbau mit einer konventionellen Transportkältemaschine ausgestattet ist, kann es alternativ, wie schon im Zusammenhang mit der nachträglichen Anordnung eines Stellantriebs der erfindungsgemäß vorgesehenen Art erwähnt, auch zweckmäßig sein, den Luftkanal in einem separaten am das Gehäuse der Transportkältemaschine angesetzten Gehäuseteil auszubilden. Der zusätzliche Gehäuseteil deckt dann vorzugweise auch die jeweils zugeordnete Belüftungsöffnung ab, so dass der gesamte Schließmechanismus und die Belüftungsöffnung gegenüber den Einflüssen aus der Umgebung des Fahrzeugs abgeschirmt sind. Dabei kann der zusätzliche Gehäuseteil, falls sich dies als erforderlich herausstellt, eine Einströmöffnung für die zuzuführende Frischluft und, ebenfalls erforderlichenfalls, einen Luftkanal umfassen, über den die durch die Eintrittsöffnung einströmende Luft direkt zu der zugeordneten Belüftungsöffnung strömt.

Wie schon erwähnt, kann im Fall, dass die Transportkältemaschine eines erfindungsgemäßen Nutzfahrzeugs, wie aus dem Stand der Technik an sich bekannt, ein von der Außenseite ihres Gehäuse her zugängliches Bedienfeld für eine Steuerung der Transportkältemaschine umfasst, an diesem Bedienfeld eine Bedieneinheit zum Senden eines das Öffnen oder Schließen der Belüftungsöffnung auslösenden Stellsignals an die Schließeinrichtung vorgesehen sein. Diese Bedieneinheit kann beispielsweise als einfacher Schalter ausgebildet sein, durch dessen Betätigung der Fahrzeugführer ein Schließ- oder Öffnen-Signal an den Stellantrieb der Schließeinrichtung abgibt. Dieses Stellsignal kann im einfachsten Fall ein Schließen oder Unterbrechen eines Stromkreises sein, der den Stellantrieb mit elektrischer Energie versorgt.

Alternativ oder ergänzend zu der Möglichkeit, die Steuereinrichtung mittels einer Bedieneinheit der voranstehend erläuterten Art ist es auch möglich, die Absendung eines jeweiligen Steuersignals an die Schließeinrichtung durch die erfindungsgemäß vorgesehene Steuerungseinrichtung durch eine drahtlose Übertragung von Stellsignalen auszulösen. Hierzu kann beispielsweise ein Mobilfunkgerät, wie ein Mobiltelefon, eingesetzt werden, das in der Lage ist, in ein drahtloses Netzwerk eingebunden zu werden und mittels bekannter Kommunikationsprotokolle geeignete Stellsignale an die Steuerungseinrichtung zu übertragen.

Im Fall, dass auch ein erfindungsgemäßes Nutzfahrzeug in an sich bekannter Weise eine Überwachungs- und Steuerungseinrichtung umfasst, beispielsweise ein Telematik-System der oben bereits erwähnten Art, die eine den Zustand des Fahrzeugs, der Atmosphäre des Laderaums oder des im Laderaum verstauten Transportguts wiedergebende Kenngröße erfasst, kann diese dazu genutzt werden, im Fall, dass die erfasste Kenngröße von einem Sollwert abweicht, an die Schließeinrichtung ein Stellsignal zum Öffnen oder Schließen der Belüftungsöffnung abzusenden. Auf diese Weise ist eine vollautomatische Betätigung der Schließeinrichtung möglich, ohne dass dazu größere Umbauten oder Ergänzungen der an einer Transportkältemaschine oder an dem sie tragenden Nutzfahrzeug üblicherweise vorhandenen Steuerungs- und Überwachungseinrichtung erforderlich sind.

So kann beispielsweise im Fall, dass der Aufbau, wie üblich, eine Tür umfasst, über die das Be- und Entladen des Laderaums des Aufbaus erfolgt, die Überwachungs- und Steuereinrichtung den Schließzustand der Tür erfassen, wobei die Überwachungs- und Steuereinrichtung in Abhängigkeit vom erfassten Schließzustand ein Signal zum Öffnen oder Schließen der Belüftungsöffnungen an die Schließeinrichtung abgeben. Auf diese Weise kann beispielsweise sicher verhindert werden, dass die Belüftungsöffnung noch geöffnet ist, wenn das Transportgut im Laderaum verstaut und bei verschlossenen Türen der Kühlbetrieb bereits begonnen hat.

Wie ebenfalls schon erwähnt, kann die erfindungsgemäß vorgesehene Steuereinrichtung, die die Stellsignale zum Öffnen und Verschließen der Belüftungsöffnungen an die Schließeinrichtung kann abgibt, Teil einer Steuereinheit zur Steuerung der Transportkältemaschine sein. Auf diese Weise kann die Steuereinheit insgesamt oder einzelne ihrer Module und Komponenten für die Steuerung der erfindungsgemäß vorgesehenen Schließeinrichtung genutzt werden. Die Steuereinheit steuert in diesem Fall nicht nur die Systemkomponente "Transportkältemaschine", sondern auch die weitere Systemkomponente "Schließeinrichtung der Belüftungsöffnungen".

Alternativ oder zusätzlich kann die Steuereinrichtung, die die Stellsignale zum Öffnen und Verschließen der Belüftungsöffnungen an die Schließeinrichtung abgibt, Teil einer Telematik-Einrichtung des Nutzfahrzeugs sein.

Bei Nutzfahrzeugen, die in an sich ebenfalls bekannter Weise mit einer Steuerungseinrichtung ausgestattet sind, die per drahtloser Datenfernübertragung übertragene Steuersignale empfängt und Informationen über den Fahrzeugzustand sammelt und bedarfsweise beispielsweise an eine Logistikzentrale signaltechnisch übermittelt (so genannte Telematik-Systeme), kann die Schließeinrichtung an diese Steuerungseinrichtung angeschlossen und auf diese Weise fernsteuerbar sein. Hierbei gibt dann die Steuerungseinrichtung nach Empfang eines entsprechenden Steuersignal ein korrespondierendes Stellsignal an den Stellantrieb der Schließeinrichtung ab, woraufhin die Belüftungsöffnung geschlossen oder geöffnet wird. Genauso kann selbstverständlich eine solche Steuerungseinrichtung dazu genutzt werden, Informationen über den Stellzustand ("geöffnet" / "geschlossen") an eine entfernte Leitstelle oder Überwachungszentrale per drahtloser Datenübertragung zu übermitteln.

Bei den voranstehend erwähnten, erfindungsgemäß genutzten Steuer- und Überwachungseinrichtungen kann es sich um eine Einrichtung handeln, die bestimmte Kenngrößen des Zustands des Nutzfahrzeugs allgemein erfasst und/oder um eine Steuereinrichtung, die speziell die Transportkältemaschine überwacht und steuert. Insbesondere die für die Steuerung von Transportkältemaschinen vorgesehenen Steuereinrichtungen sind dabei in der Lage, auch differenzierte Informationen über den Zustand der Transportkältemaschine und die damit gegebenenfalls verbundenen Aggregate des Nutzfahrzeugs an eine Leitstelle zu übermitteln.

Steht keine Steuereinheit an dem Nutzfahrzeug zur Verfügung, die für die erfindungsgemäßen Zwecke genutzt werden kann, dann die Steuereinrichtung auch alleine eine Steuereinheit bilden, über die die Schließeinrichtung bedarfsweise und in diesem Fall unabhängig von anderen Steuereinrichtungen des Nutzfahrzeugs gesteuert wird.

Grundsätzlich kann der erfindungsgemäß der Schließeinrichtung der Belüftungsöffnung zugeordnete Stellantrieb in jeder geeigneten Weise antreiben. So können größere Stellkräfte insbesondere durch einen hydraulischen oder pneumatischen Antrieb ausgeübt werden. Besonders einfach lassen sich die Steuerung und der Antrieb der Stelleinrichtung dann verwirklichen, wenn der Stellantrieb der Schließeinrichtung elektrisch angetrieben ist. Dies gilt insbesondere dann, wenn die kälteerzeugenden (Kompressor) und luftleitenden (Lüfter) Aggregate der Transportkältemaschine elektrisch angetrieben sind, so dass die für den Betrieb der Stelleinrichtung benötigte elektrische Energie an der Transportkältemaschine ohne Weiteres zur Verfügung steht.

Um die Verteilung der in den Laderaum einströmenden Frischluft zu optimieren, können in Einströmrichtung der Frischluft hinter der Belüftungsöffnung Luftleitelemente angeordnet sein, die den Frischluftstrom abbremsen und auf diese Weise sicherstellen, dass der Frischluftstrom nicht weit in den Laderaum hineinschießt, sondern auch den zur mit den Belüftungsöffnungen versehenen Stirnseite nahen Bereich des Laderaums überstreicht.

Nachfolgend wird die Erfindung anhand einer ein Ausführungsbeispiel darstellenden Zeichnung näher erläutert. Es zeigen jeweils schematisch:

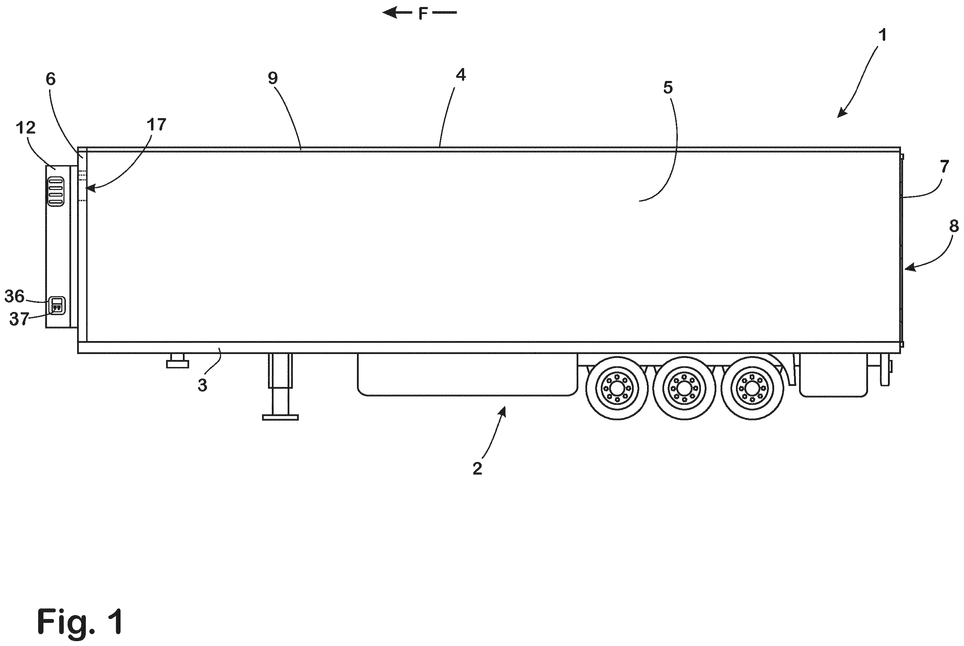

- Fig. 1: ein Nutzfahrzeug in einer seitlichen Ansicht;
- Fig. 2: die Stirnseite des Nutzfahrzeugs mit daran befestigter Transportkältemaschine gemäß Fig. 1 in frontaler Ansicht;

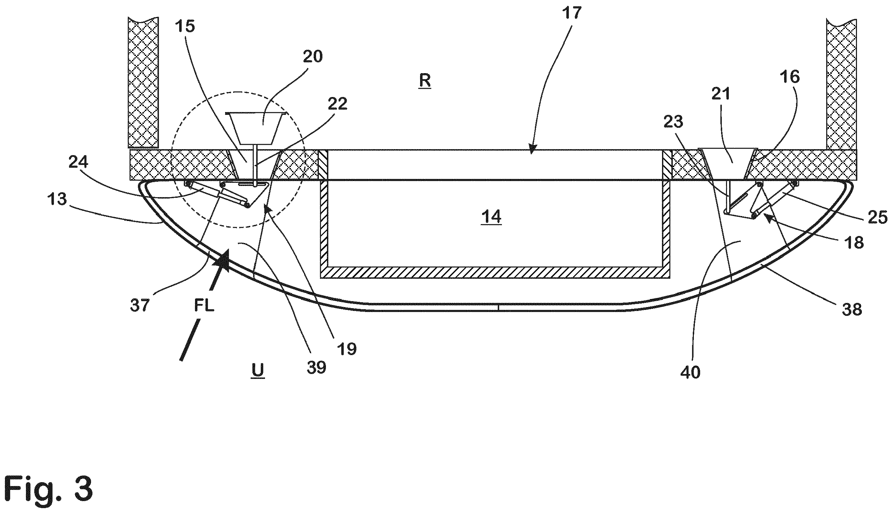

- Fig. 3: das Nutzfahrzeug in einem Schnitt entlang der in Fig. 2 angegebenen Schnittlinie A-A;
- Fig. 4: einen vergrößerten Ausschnitt A von Fig. 3.

Bei dem in den Figuren dargestellten Nutzfahrzeug 1 handelt es sich um einen Sattelauflieger, der im Gebrauch von einem hier nicht dargestellten Zugfahrzeug gezogen wird. Das Nutzfahrzeug 1 umfasst ein Chassis 2 konventioneller Bauart, an dem in üblicher Weise die Achsen mit den Rädern des Nutzfahrzeugs 1 gelagert sind und das einen Boden 3 trägt, auf dem ein Aufbau 4 errichtet ist, in der Fachsprache auch "Kofferaufbau" genannt.

Der quaderförmige Kofferaufbau 4 ist durch zwei in üblicher Weise als feste Wandpaneele ausgebildete Längsseitenwände, von denen hier nur die in Fahrtrichtung F gesehene linke Längswand 5 zu sehen ist und die sich an jeweils einer der Längsseiten des Nutzfahrzeugs 1 über die Länge des Nutzfahrzeugs 1 erstrecken, eine Stirnwand 6, die die Längsseitenwände 5 des Aufbaus 4 an der dem Zugfahrzeug zugeordneten, bei normaler Vorwärtsfahrt (Fahrtrichtung F) vorne angeordneten Stirnseite des Nutzfahrzeugs 1 miteinander verbindet, einer Rückwand 7, die an der zur Stirnwand 6 gegenüberliegenden Seite die Längsseitenwände 5 miteinander verbindet und eine Türanlage 8 umfasst, über die der vom Kofferaufbau 4 umgrenzte Laderaum R beladen werden kann, und ein Dach 9, das von den Längsseitenwänden 5, der Stirnwand 6 und der Rückwand 7 getragen ist.

An der Außenseite 10 der Stirnwand 6 ist in ebenso bekannter Weise eine Transportkältemaschine 12 angeordnet, die im Gebrauch temperierte Luft in den Laderaum R bläst.

Die Transportkältemaschine 12 umfasst ein Gehäuse 13, in dem in an sich bekannter Weise - hier nicht gezeigt - ein Verbrennungsmotor einen Generator antreibt, der mit der von ihm erzeugten elektrischen Energie den Antriebsmotor eines Verdichters antreibt. Dabei kann ein konventioneller Akkumulator vorgesehen sein, um die vom Generator erzeugte elektrische Energie zu speichern und zu puffern. Vom Verdichter wird wie bei einer konventionellen Kompressionskältemaschine in einem Kreisprozess gasförmiges Kältemittel verdichtet, bevor es in einem nachgeschalteten, hier ebenfalls nicht sichtbaren Verflüssiger kondensiert, um dann über ein ebenso nicht dargestelltes Drosselorgan geleitet zu werden, wo sein Druck reduziert wird. In dem anschließend durchlaufenen Verdampfer wird das Kältemittel anschließend verdampft und entzieht dabei der Umgebung Wärme. Ein Luftstrom, der im Kreislauf aus dem Laderaum R abgesaugt, durch den Verdampfer geleitet und über einen Einblaskanal 14 der Transportkältemaschine 12 zurück in den oberen, dem Dach 9 nahen Bereich des Laderaums R geblasen wird, wird auf diese Weise abgekühlt. Der Verdichter saugt das im Verdampfer verdampfte Kältemittel wieder an und der Kreisprozess ist geschlossen.

Im oberen, dem Dach 9 des Kofferaufbaus 4 nahen Teil des Bereichs 5 der Stirnwand 6, der vom Gehäuse 13 der Transportkältemaschine 12 überdeckt ist, sind zwei Belüftungsöffnungen 15,16 vorgesehen, die jeweils rechts und links seitlich von der in die Stirnwand 6 ebenso vorgesehenen Austrittsöffnung 17 des Einblaskanals 14 angeordnet sind. Die Belüftungsöffnungen 15,16 dienen zum Einleiten von Frischluft aus der Umgebung U in den vom Aufbau 4 umgrenzten Laderaum R.

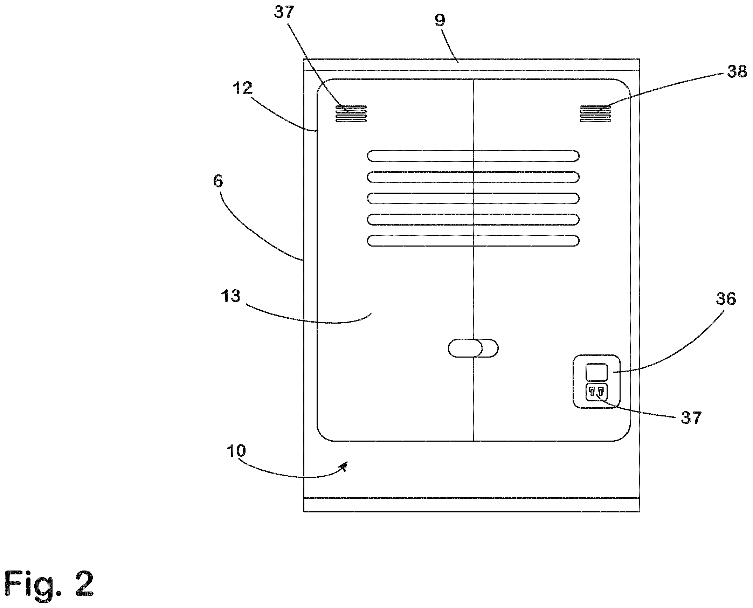

Zum Verschließen der Belüftungsöffnungen 15,16 ist jeweils eine Schließeinrichtung 18,19 vorgesehen, die jeweils ein plattenartiges, aus wärmedämmendem Material gebildetes Verschlusselement 20,21 umfasst. Dessen Form ist so an die Öffnungsform der Belüftungsöffnungen 15,16 angepasst, dass das Verschlusselement 20,21, wenn es sich in Schließstellung befindet (s. Fig. 2, linker Teil, Verschlusselement 20), die zugeordnete Belüftungsöffnung 15,16 dicht verschließt.

Die Verschlusselemente 20,21 sind jeweils von einem stangenartigen Stellglied 22,23 getragen, über das sie aus ihrer Schließstellung in der jeweiligen Belüftungsöffnung 15,16 in Richtung des Laderaums R in eine Öffnungsstellung bewegt werden können, in der die jeweilige Belüftungsöffnung 15,16 freigegeben ist, so dass ein Frischluftstrom FL aus der Umgebung U durch sie hindurch in den Laderaum R gelangt (s. Fig. 2, rechter Teil, Verschlusselement 21).

Zum Verstellen der Verschlusselemente 20,21 sind die Stellglieder 22,23 jeweils mit einem Stellantrieb 24,25 gelenkig verkoppelt, der durch einen elektrisch angetriebenen Hubzylinder 26 gebildet ist. Mit dem Ende ihres Zylinderkörpers 28 sind die Hubzylinder 26 jeweils in einem Gelenk 29 um eine Vertikalachse schwenkbar an der Außenseite 10 der Stirnwand 6 abgestützt, während ihre Stellstange 30 mit ihrem freien Ende jeweils über ein Koppelglied 31 mit dem zugeordneten Stellglied 22,23 gelenkig verbunden ist.

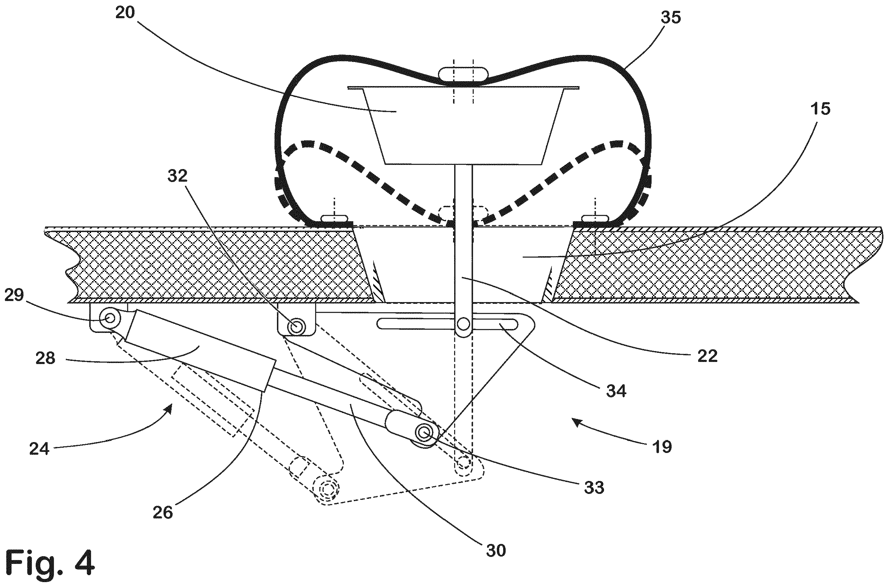

Das in Draufsicht (Fig. 4) dreiecksförmige Koppelglied 31 ist dazu in seinem zum Gelenk 29 nächstbenachbarten ersten Eckbereich in einem Schwenkgelenk 32 ebenfalls um eine Vertikalachse schwenkbar an der Stirnwand 6 gelagert. In seinem mit dem größten Abstand von der Stirnwand 6 und dem Gelenk 32 beabstandeten zweiten Eckbereich ist die Stellstange 30 des jeweiligen Hubzylinders 26 in einem weiteren Schwenkgelenk 33 ebenfalls um eine Vertikalachse verschwenkbar mit dem Koppelglied 31 verbunden.

Zusätzlich ist parallel zu der Kante des Koppelglieds 31, das den Eckbereich, in dem das Schwenkgelenk 32 vorgesehen ist, mit dem dritten Eckbereich des Koppelglieds 31 erstreckt, eine linear verlaufende Führungsnut 34 eingeformt. In dieser Führungsnut 34 ist das dem jeweiligen Stellantrieb 24,25 zugeordnete Stellglied 22,23 mit seinem von dem von ihm jeweils getragenen Verschlusselement 20,21 abgewandten Ende verschiebbar geführt. Auf diese Weise kann das jeweilige Stellglied 22,23 mit dem von ihm getragenen Verschlusselement 20,21 durch Aus- bzw. Einfahren der Stellstange 30 in einer geradlinigen Bewegung zwischen der in Fig. 4 in gestrichelten Linien angedeuteten Schließstellung und der in Fig. 4 in durchgezogenen dargestellten Öffnungsstellung verstellt werden.

An der dem Laderaum R zugewandten Stirnseite der Verschlusselemente 20,21 kann ein streifenförmiges Luftleitelement 35 vorgesehen sein, dass sich in horizontaler Richtung erstreckt und mit seinen Enden an der dem Laderaum R zugeordneten Seite der Stirnwand 6 nahe dem jeweiligen seitlichen Rand der jeweiligen Belüftungsöffnung 15,16 fixiert sein. Das Luftleitelement 35 besteht dabei aus einem flexiblen Material, so dass es den Stellbewegungen der Verschlusselemente 20,21 folgen kann. Es stellt sicher, dass die durch die jeweilige Belüftungsöffnung 15,16 einströmende Frischluft FL abgebremst wird und auf diese Weise auch den zur Stirnwand 6 nahen Bereich des Laderaums R sicher überstreicht.

Die elektrisch betriebenen Stellantriebe 24,25 werden über die von dem Generator der Transportkältemaschine 12 erzeugte elektrische Energie versorgt. Dabei ist an der Außenseite des Gehäuses 13 der Transportkältemaschine 12 ein Bedienfeld 36 vorgesehen, über das der Fahrzeugführer Steuerbefehle an die Transportkältemaschine 12 und Einstellungen für ihren Betrieb vornehmen kann. An diesem Bedienfeld 36 ist zusätzlich eine Bedieneinheit 37 in Form von Schaltern vorgesehen, mittels der Stellsignale ausgelöst werden können, auf die hin die Stellantriebe 24,25 das jeweils zugeordnete Verschlusselement 20,21 in seine Öffnungs- oder seine Schließstellung bewegen.

Sofern seitlich rechts und links von dem Einblaskanal 14 ausreichend Raum im oberen Teil des Gehäuses 13 der Transportkältemaschine 12 vorhanden ist, können die Stellantriebe 24,25 in diesem Raum angeordnet werden. Um dabei eine zielgerichtete Zuführung ausreichender Mengen von Frischluft FL zu den Belüftungsöffnungen 15,16 zu gewährleisten, können an der von der Stirnwand 6 abgewandten freien Stirnwand des Gehäuses 13 der Transportkältemaschine 12 der jeweiligen Belüftungsöffnung zugeordnete Eintrittsöffnungen 37,38 vorgesehen sein. Die Zuführung der über diese Eintrittsöffnungen 37,38 einströmenden Frischluft FL zur zugeordneten Belüftungsöffnung 15,16 kann dabei über jeweils einen durch das Gehäuse 13 der Transportkältemaschine 12 führenden Luftkanal 39,40 erfolgen.

Im Fall, dass kein ausreichender Raum innerhalb des Gehäuses 13 der Transportkältemaschine 12 vorhanden ist, kann das Gehäuse 13 um einen Aufsatz erweitert werden, der gegebenenfalls nicht nur den jeweiligen Stellantrieb 24,25 aufnimmt, sondern auch die zugeordnete Belüftungsöffnung 15,16 abdeckt.

### BEZUGSZEICHEN

- 1: Nutzfahrzeug (Sattelauflieger)
- 2: Chassis des Nutzfahrzeugs 1
- 3: Boden des Nutzfahrzeugs 1
- 4: Aufbau (Kofferaufbau)
- 5: Längswand des Aufbaus 4
- 6: Stirnwand des Aufbaus 4
- 7: Rückwand des Aufbaus 4
- 8: Türanlage des Aufbaus 4
- 9: Dach des Aufbaus 4
- 10: Außenseite der Stirnwand 6
- 12: Transportkältemaschine
- 13: Gehäuse der Transportkältemaschine 12
- 14: Einblaskanal der Transportkältemaschine 12
- 15,16: Belüftungsöffnungen
- 17: Austrittsöffnung des Einblaskanals 14
- 18,19: Schließeinrichtungen
- 20,21: Verschlusselemente der Schließeinrichtungen18,19
- 22,23: Stellglieder der Schließeinrichtungen18,19
- 24,25: Stellantriebe der Schließeinrichtungen18,19
- 26: Hubzylinder der Stellantriebe 24,25
- 28: Zylinderkörper der Hubzylinder 26
- 29: Gelenk der Schließeinrichtungen18,19
- 30: Stellstange der Schließeinrichtungen18,19
- 31: Koppelglied der Schließeinrichtungen18,19
- 32: Schwenkgelenk der Schließeinrichtungen18,19
- 33: Schwenkgelenk der Schließeinrichtungen18,19
- 34: Führungsnut des Koppelglieds 31
- 35: Luftleitelement
- 36: Bedienfeld der Transportkältemaschine 12
- 37: Bedieneinheit
- 37,38: Eintrittsöffnungen
- 39,40: Luftkanäle

- F: Fahrtrichtung
- FL: Frischluftstrom
- R: vom Aufbau 4 umgrenzter Laderaum
- U: freie Umgebung des Nutzfahrzeugs 1

## Patentansprüche

1. Nutzfahrzeug mit einem Aufbau (4), der einen Laderaum (R) zur Aufnahme von Transportgut umgrenzt und eine Wand (6) aufweist,
- wobei das Nutzfahrzeug (1) eine Steuereinrichtung umfasst, die zum Steuern einer Systemkomponente des Nutzfahrzeugs (1) vorgesehen ist, und
- wobei an der Wand (6) des Aufbaus (4) mindestens eine Belüftungsöffnung (15,16) zum Einleiten von Luft aus der Umgebung des Aufbaus (4) in den Laderaum (R) vorgesehen ist,
**dadurch gekennzeichnet, dass**
der Belüftungsöffnung (15,16) eine Schließeinrichtung (18,19) zugeordnet ist, die eine weitere Systemkomponente des Nutzfahrzeugs (1) bildet, und **dass** Steuereinrichtung bedarfsweise Stellsignale zum Öffnen und Verschließen der Belüftungsöffnung (15,16) an die Schließeinrichtung (18,19) abgibt.

2. Nutzfahrzeug nach Anspruch 1, **dadurch gekennzeichnet, dass** die Belüftungsöffnung (15,16) in der Wand (6) des Aufbaus vorgesehen ist.

3. Nutfahrzeug nach einem der voranstehenden Ansprüche, **dadurch gekennzeichnet, dass** an der zur Umgebung (U) des Aufbaus (4) gewandten Außenseite (10) der Wand (6) eine Transportkältemaschine (12) befestigt ist, die ein Gehäuse (13) und eine Energieversorgung umfasst, die die zum Betrieb der Transportkühlmaschine (12) benötigte Energie liefert.

4. Nutzfahrzeug nach einem der voranstehenden Ansprüche, d**adurch gekennzeichnet**, dass die Schließeinrichtung (18,19) einen motorisch angetriebenen Stellantrieb (24,25) umfasst, der dazu eingerichtet ist, die Schließeinrichtung (18,19) zwischen einer Schließstellung, in der die zugeordnete Belüftungsöffnung (15,16) geschlossen ist, und einer Öffnungsstellung, in der die zugeordnete Belüftungsöffnung (15,16) geöffnet ist, zu verstellen.

5. Nutzfahrzeug nach Anspruch 4, **dadurch gekennzeichnet, dass** der Stellantrieb (24,25) die für seinen Betrieb erforderliche Energie von einer an dem Nutzfahrzeug (1) vorgesehenen (12) Energieversorgung bezieht.

6. Nutzfahrzeug nach Anspruch 3 und 5, **dadurch gekennzeichnet, dass** der Stellantrieb (24,25) der Schließeinrichtung (18,19) die für seinen Betrieb erforderliche Energie von der Energieversorgung der Transportkältemaschine (12) bezieht.

7. Nutzfahrzeug nach einem der voranstehenden Ansprüche, **dadurch gekennzeichnet, dass** der Stellantrieb (24,25) der Schließeinrichtung (18,19) elektrisch angetrieben ist.

8. Nutzfahrzeug nach einem der voranstehenden Ansprüche, **dadurch gekennzeichnet, dass** die Steuereinrichtung, die die Stellsignale zum Öffnen und Verschließen der Belüftungsöffnungen (15,16) an die Schließeinrichtung (18,19) abgibt, Teil einer Steuereinheit zur Steuerung der Transportkältemaschine (12) ist.

9. Nutzfahrzeug nach einem der Ansprüche 1 bis 7, **dadurch gekennzeichnet, dass** die Steuereinrichtung, die die Stellsignale zum Öffnen und Verschließen der Belüftungsöffnungen (15,16) an die Schließeinrichtung (18,19) abgibt, Teil einer Telematik-Einrichtung des Nutzfahrzeugs (1) ist.

10. Nutzfahrzeug nach einem der Ansprüche 1 bis 7, **dadurch gekennzeichnet, dass** die Steuereinrichtung , die die Stellsignale zum Öffnen und Verschließen der Belüftungsöffnungen (15,16) an die Schließeinrichtung (18,19) abgibt, als unabhängig von anderen Steuereinrichtungen des Nutzfahrzeugs (1) agierende Steuereinheit ausgebildet ist.

11. Nutzfahrzeug nach einem der voranstehenden Ansprüche, **dadurch gekennzeichnet, dass** die Steuereinrichtung ein manuell durch eine Bedienperson betätigbares Bedienelement umfasst, welches bei Betätigung das an die Schließeinrichtung (18,19) abgegebene Stellsignal zum Öffnen und Verschließen der Belüftungsöffnungen (15,16) auslöst.

12. Nutzfahrzeug nach einem der Ansprüche 3 bis 11, **dadurch gekennzeichnet, dass** die Belüftungsöffnung (15,16) in dem von der Transportkältemaschine (12) abgedeckten Bereich der Wand (6) des Aufbaus (4) angeordnet ist und in oder an dem Gehäuse (13) der Transportkältemaschine (12) ein Luftkanal (39,40) vorgesehen ist, der von der freien Umgebung der Transportkältemaschine (12) zu der Belüftungsöffnung (15,16) führt.

13. Nutzfahrzeug nach Anspruch 12, **dadurch gekennzeichnet, dass** der Luftkanal (39,40) im Gehäuse (13) der Transportkältemaschine (12) und die Eintrittsöffnung (37,38) in eine Gehäusewand des Gehäuses (13) der Transportkältemaschine (12) eingeformt ist.

14. Nutzfahrzeug nach Anspruch 13, **dadurch gekennzeichnet, dass** der Luftkanal (39,40) in einem separaten am das Gehäuse (13) der Transportkältemaschine (12) angesetzten Gehäuseteil ausgebildet ist.

15. Nutzfahrzeug nach einem der voranstehenden Ansprüche, **dadurch gekennzeichnet, dass** es eine Überwachungs- und Steuerungseinrichtung umfasst, die eine den Zustand des Nutzfahrzeugs (1), der Atmosphäre des Laderaums (R) oder des im Laderaum (R) verstauten Transportguts wiedergebende Kenngröße erfasst und im Fall, dass die erfasste Kenngröße von einem Sollwert abweicht, an die Schließeinrichtung (18,19) ein Stellsignal zum Öffnen oder Schließen der Belüftungsöffnung (15,16) absendet.
